# EUROPEAN PATENT APPLICATION

(11) **EP 4 310 406 A1**
(43) Date of publication of application: **24.01.2024**
(21) Application number: 22831385.4
(22) Date of filing: 24.04.2022
(51) Int. Cl.: F24F 11/30, F24F 11/89, F24F 11/00

(54) **AIR CONDITIONER SECURITY PROTECTION METHOD AND APPARATUS, STORAGE MEDIUM AND TERMINAL DEVICE**

(30) Priority: 29.06.2021 CN 202110740453
(71) Applicant: Foshan Shunde Midea Electric Science and Technology Co., Ltd., Foshan, Guangdong 528311 (CN); GD Midea Air-Conditioning Equipment Co., Ltd., Foshan, Guangdong 528311 (CN)
(72) Inventor: LI, Qi, Foshan, Guangdong 528311 (CN)
(74) Representative: Whitlock, Holly Elizabeth Ann
(86) International application number: PCT/CN2022/088808
(87) International publication number: WO 2023/273556

(57) **Abstract**

The present application belongs to the technical field of air conditioner control, and discloses an air conditioner security protection method and apparatus, a storage medium and a terminal device. In the present application, when a target air conditioner is scanned, verification information is sent to the target air conditioner; a verification result fed back by the target air conditioner according to the verification information is received; and when the verification result is that verification is successful, a control instruction is sent to the target air conditioner so as to control the operation of the target air conditioner. Control rights of the air conditioner are confirmed by means of the verification information, which prevents a situation in which other people are also able to control the air conditioner of a user, thus improving the security of air conditioner control.

## Description

The present application claims priority to Chinese Patent Application No. 202110740453.8, filed on June 29, 2021, the entire contents of which are incorporated herein by reference.

### TECHNICAL FIELD

The present application relates to the technical field of air conditioner control, in particular to a security protection method for an air conditioner, a device, a storage medium and a terminal equipment.

### BACKGROUND

The control process of traditional home appliances is usually mechanical or infrared directional remote-control operation. When mechanical buttons are used for too long, electrical buttons may malfunction. On the other hand, infrared directional remote control requires directional control of the target device, which has several disadvantages: the robustness of the control is not good, the control needs to be in the same space and directional aiming, and the remote control is easy to lose and difficult to find. Combined with the current technological development, in order to solve such problems, an omnidirectional multi-space virtual digital remote control interaction technology is provided to achieve the purpose of digital remote control.

In the current digital remote-control technology, the control rights of the air conditioner need to be determined before controlling the air conditioner. However, in the related art, the determination of the control rights of the air conditioner is based on the connection signal strength between the mobile terminal and the air conditioner. When the signal strength meets the conditions, it is believed that the corresponding mobile terminal has the right to control the air conditioner. However, due to the signal differences of individual space and the diversification of living environments, there are situations where other people have control rights of the user's air conditioner, so that other people can also control the user's own air conditioner, which greatly reduces the security of air conditioner control.

The above contents are only used to assist in understanding the technical solution of the present application, and does not represent an admission that the above contents are prior art.

### SUMMARY

### TECHNICAL PROBLEM

The main purpose of the present application is to provide a security protection method for an air conditioner, a device, a storage medium and a terminal equipment, aiming at solving the problems of low security of digital remote control in the related art.

### TECHNICAL SOLUTION

In order to achieve the above purpose, the present application provides a protection method for an air conditioner security, the method including the following steps:
determining that a target air conditioner is scanned, and sending verification information to the target air conditioner;
receiving a verification result fed back by the target air conditioner according to the verification information; and
determining that the verification result is authenticated, and sending a control instruction to the target air conditioner to control an operation of the target air conditioner.

In an embodiment, before the determining that the target air conditioner is scanned, and sending the verification information to the target air conditioner, the method further includes:
detecting that the target air conditioner is set to a security mode, and receiving prompt information sent by the target air conditioner;
sending target password information to the target air conditioner according to the prompt information; and
determining that the target password information is received by the target air conditioner, and binding the target air conditioner according to the target password information.

In an embodiment, before the detecting that the target air conditioner is set to the security mode, and receiving the prompt information sent by the target air conditioner, the method further includes:
establishing a wireless connection with the target air conditioner;
detecting a signal strength corresponding to the wireless connection; and
determining that the signal strength reaches a preset strength, and setting the target air conditioner to the security mode.

In an embodiment, before the receiving the prompt information sent by the target air conditioner, the method further includes:
obtaining current address information, and sending the current address information to the target air conditioner for detection;
receiving a detection result fed back by the target air conditioner according to the current address information; and
determining the detection result that the current address information is not in a database, receiving the prompt information sent by the target air conditioner.

In an embodiment, before the receiving the prompt information sent by the target air conditioner, the method further includes:
obtaining a device identification code of the target air conditioner;
determining whether there is historical password information in the target air conditioner according to a device identification code; and
in response to the historical password information existing in the target air conditioner, clearing the historical password information, and receiving the prompt information sent by the target air conditioner.

In an embodiment, the binding the target air conditioner according to the target password information includes:
extracting a set password input by a user from the target password information;
obtaining the current address information, current number information and the device identification code of the target air conditioner; and
forming a mapping relationship table according to the set password, the current number information, the current address information and the device identification code, and binding the target air conditioner through the mapping relationship table.

In an embodiment, after the determining that the target password information is received by the target air conditioner, and binding the target air conditioner according to the target password information, the method further includes:
detecting that other mobile terminals are connected to the target air conditioner, and receiving a password information comparison result between the target air conditioner and the other mobile terminals fed back by the target air conditioner; and
in response to the password information comparison result being that the password information is consistent, unbinding with the target air conditioner to bind the other mobile terminals with the target air conditioner.

In order to achieve the above purpose, the present application further provides a security protection device for an air conditioner, including: a sending module, a receiving module, and a control module.

The sending module is configured to send verification information to a target air conditioner in response to determining that the target air conditioner is scanned.

The receiving module is configured to receive a verification result fed back by the target air conditioner according to the verification information.

The control module is configured to send a control instruction to the target air conditioner to control an operation of the target air conditioner in response to determining that the verification result is authenticated.

In addition, in order to achieve the above purpose, the present application further provides a terminal equipment, including: a memory, a processor, and a security protection program for an air conditioner stored on the memory and operable on the processor; and the security protection program for the air conditioner is configured to implement the steps of the security protection method for the air conditioner mentioned above.

In addition, in order to achieve the above purpose, the present application further provides a storage medium; a security protection program for an air conditioner is stored on the storage medium, and when the security protection program for the air conditioner is executed by a processor, the steps of the security protection method for the air conditioner mentioned above are implemented.

### BENEFICIAL EFFECT

The present application sends the verification information to the target air conditioner when the target air conditioner is scanned; receives the verification result fed back by the target air conditioner according to the verification information; and in responds to that the verification result is authenticated, sends control instructions to the target air conditioner to control the operation of the target air conditioner. The control right of the air conditioner is determined through the verification information, thereby avoiding the situation that other people can also control the user's own air conditioner, and improving the security of air conditioner control.

### BRIEF DESCRIPTION OF THE DRAWINGS

FIG. 1 is a schematic structural diagram of a terminal equipment in a hardware operation environment involved according to an embodiment solution of the present application.
FIG. 2 is a schematic flowchart of a security protection method for an air conditioner according to a first embodiment of the present application.
FIG. 3 is a schematic flowchart of the security protection method for the air conditioner according to a second embodiment of the present application.
FIG. 4 is a schematic flowchart of the security protection method for the air conditioner according to a third embodiment of the present application.
FIG. 5 is a schematic structural diagram of the security protection method for the air conditioner according to the first embodiment of the present application.

The realization, functional features and advantages of the present application will be further described in conjunction with the embodiments and with reference to the accompanying drawings.

### DETAILED DESCRIPTION OF THE EMBODIMENTS

It should be understood that the specific embodiments described herein are only used to explain the present application, and are not intended to limit the present application.

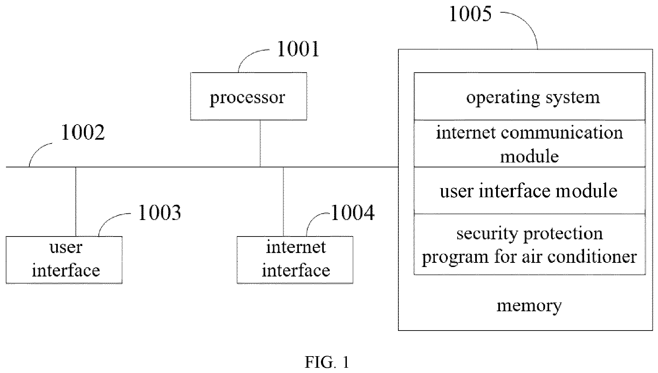

As shown in FIG. 1, FIG. 1 is a schematic structural diagram of a terminal equipment in a hardware operation environment involved in the solution of the embodiment according to the present application.

As shown in FIG. 1, the terminal equipment may include: a processor 1001, such as a central processing unit (CPU), a communication bus 1002, a user interface 1003, a network interface 1004, and a memory 1005. The communication bus 1002 is used to realize connection and communication between these components. The user interface 1003 may include a display screen, an input unit such as a keyboard, and the user interface 1003 may also include a standard wired interface and a wireless interface. The network interface 1004 may include a standard wired interface and a wireless interface (such as a Wireless-Fidelity (Wi-Fi) interface). The memory 1005 may be a high-speed random-access memory (RAM), or a stable non-volatile memory (NVM), such as a disk memory. In an embodiment, the memory 1005 may also be a storage device independent of the aforementioned processor 1001.

Those skilled in the art can understand that the structure shown in FIG. 1 does not constitute a limitation on the terminal equipment, and may include more or less components than shown in the figured, or combine some components, or arrange different components.

As shown in FIG. 1, memory 1005 as a storage medium may include an operating system, a network communication module, a user interface module, and a security protection program for an air conditioner.

In the terminal equipment shown in FIG. 1, the network interface 1004 is mainly used for data communication with the network server; the user interface 1003 is mainly used for data interaction with the user; the processor 1001 and the memory 1005 in the terminal equipment of the present application can be provided in the terminal equipment. The terminal equipment calls the security protection program for the air conditioner stored in the memory 1005 through the processor 1001, and executes the security protection method for the air conditioner provided in the embodiment of the present application.

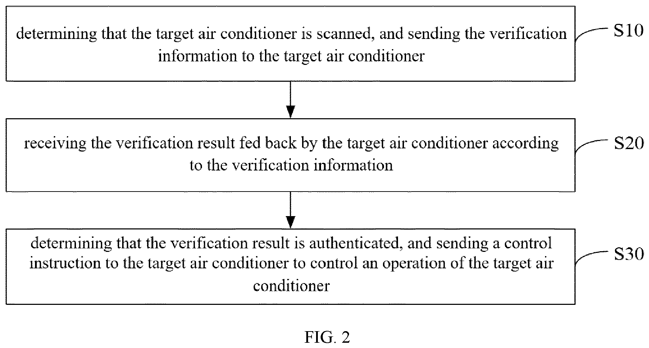

An embodiment of the present application provides a security protection method for an air conditioner. As shown in FIG. 2, FIG. 2 is a schematic flowchart of a security protection method for an air conditioner according to a first embodiment of the present application.

In this embodiment, the security protection method for the air conditioner includes the following steps.

Step S10: determining that the target air conditioner is scanned, and sending the verification information to the target air conditioner.

It should be noted that the execution subject of this embodiment can be a security protection device for an air conditioner, and the security protection device for the air conditioner can be an electronic device such as a personal computer or a server, or other controllers and devices that can achieve the same or similar functions, which is not limited in the embodiments. In this embodiment and the following embodiments, the security protection method for the air conditioner of the present application is explained by taking the random-access security protection device for the air conditioner being a mobile terminal as an example.

It should be noted that the virtual digital remote control usually uses mobile terminals such as mobile phones to control the air conditioner, and uses wireless connection methods such as Bluetooth or the internet to send the corresponding instructions to the air conditioner, such as on and off instructions or temperature parameter setting instructions. The air conditioner performs corresponding operations according to the received instructions. It is easy to understand that the transmission of wireless signals has a corresponding transmission distance. For example, the effective communication distance of Bluetooth is usually ten meters, and the strength of wireless signals corresponding to different transmission distances is also different. The farther the transmission distance, the lower the wireless signal strength. On the contrary, the shorter the transmission distance, the higher the wireless signal strength. Therefore, in the related art, the control right of the mobile terminal to the air conditioner is determined based on the relationship between the transmission distance of the wireless signal and the wireless signal strength. Specifically, in the related art, if the mobile terminal intends to control the air conditioner, it needs to ensure that the strength of the wireless signal meets certain conditions, that is, the relative distance between the mobile terminal and the air conditioner needs to be within a certain range, and this distance is usually two meters. Therefore, as long as the distance between the mobile terminal and the air conditioner is within two meters and the wireless signal strength between the mobile terminal and the air conditioner is high, the air conditioner can be controlled. However, due to the different installation positions of the air conditioners and the different indoor space structures, the wireless signal strength between other people's mobile terminals and the user's air conditioner is higher. In this case, other people can obtain the control right of the air conditioner, rather than the users themselves. In order to avoid the problem in this embodiment, when controlling the air conditioner, the user needs to input verification information to the air conditioner through the mobile terminal, and determine whether the user has the control right of the air conditioner based on the verification information, thereby avoiding disorder in the control of the air conditioner, and improving the security.

In an embodiment, when the user wants to use the air conditioner, the indoor environment is scanned through the mobile terminal, and when the air conditioner to be controlled, that is, the target air conditioner is scanned, the verification information is sent to the target air conditioner through the mobile terminal. In this embodiment, the user can send the verification information to the target air conditioner through the APP applet on the mobile terminal, or send the verification information to the target air conditioner by scanning the quick response (QR) code corresponding to the target air conditioner. The specific method can be determined according to the actual situation, which is not limited in this embodiment.

It should be noted that in this embodiment, the verification information can be sent to the target air conditioner based on the user's manual triggering operation, or a preset time can be set. When the preset time is reached, the verification information pre-stored in the mobile terminal will be sent to the target air conditioner to realize timing switching and control of the air conditioner. In this embodiment, other methods can also be used to send the verification information to the target air conditioner. The verification information can be set accordingly according to the actual situation, which is not limited in this embodiment. In addition, it should be noted that the verification information sent to the target air conditioner in this embodiment includes the terminal information of the mobile terminal, the password information input by the user, and the mobile phone number information corresponding to the user's mobile terminal, which is not limited herein.

Step S20: receiving the verification result fed back by the target air conditioner according to the verification information.

In this embodiment, after the verification information sent by the mobile terminal is received by the target air conditioner, the verification information will be verified, and then the verified verification result is sent to the mobile terminal. In an embodiment, the verification process of the target air conditioner is extracting the mobile phone number information and the password information input by the user corresponding to the mobile terminal from the verification information, and then querying the password information corresponding to the mobile phone number information from the database according to the mobile phone number information. Finally, the password information queried in the database is compared with the password information input by the user, and corresponding verification results are fed back based on the password information comparison results. In this embodiment, the verification results include verification authenticated and verification unauthenticated. For example, in response to the password information being found to be consistent after the comparison, the verification authenticated result is fed back; in response to the password information being found to be inconsistent after the comparison, the verification unauthenticated result is fed back. It should be further noted that in this embodiment, the target air conditioner is connected to a cloud server. The cloud server stores the password information stored in each user's mobile terminal. The target air conditioner can obtain the corresponding password information from the cloud server through the internet.

Step S30: determining that the verification result is authenticated, and sending a control instruction to the target air conditioner to control an operation of the target air conditioner.

In an embodiment, in response to that the verification is authenticated, it means that the mobile terminal has the corresponding control right to the target air conditioner, and can send a control instruction to the target air conditioner to realize the control of the target air conditioner. For example, input an on/off instruction to the target air conditioner, to control the startup and shutdown of the target air conditioner, and input parameter adjustment instructions to the target air conditioner to adjust the outlet air temperature of the target air conditioner when it is running. In response to that the verification is unauthenticated, it means that the user does not have the control right of the target air conditioner, or the user has the control right of the target air conditioner, but the verification information input is wrong.

In an embodiment, the target air conditioner is scanned, the verification information is sent to the target air conditioner; the verification result fed back by the target air conditioner according to the verification information is received. The verification result is determined to be authenticated, the control instruction is sent to the target air conditioner to control the operation of the target air conditioner, and the control right of the air conditioner is confirmed through the verification information, so as to avoid the situation that other people can also control the user's own air conditioner, and improve the security of air conditioner control.

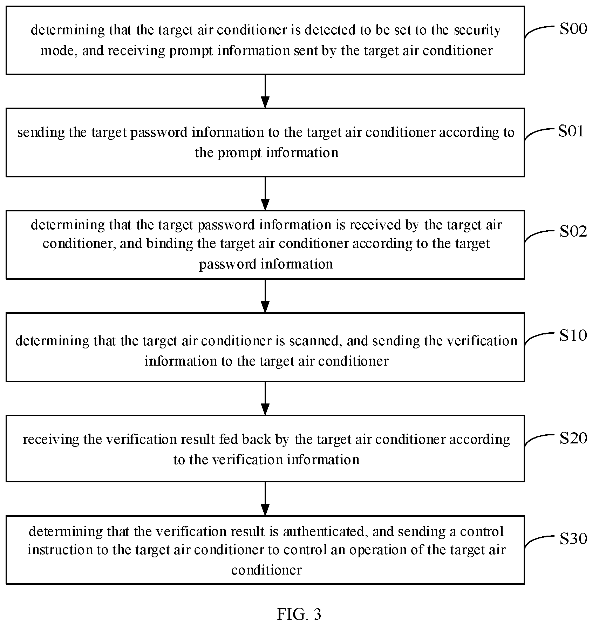

As shown in FIG. 3, FIG. 3 is a schematic flowchart of the security protection method for the air conditioner according to a second embodiment of the present application.

Based on the first embodiment above, before the step S10, the security protection method for the air conditioner in this embodiment further includes:

Step 500: determining that the target air conditioner is detected to be set to the security mode, and receiving prompt information sent by the target air conditioner.

It should be noted that in this embodiment, in order to further improve the security of air conditioner control, before performing control verification on the target air conditioner, the target air conditioner is bound to the mobile terminal to ensure the uniqueness between the target air conditioner and the mobile terminal. In addition, before binding the target air conditioner to the mobile terminal, it is necessary to ensure that the target air conditioner is in a security mode. First, this embodiment needs to detect whether the target air conditioner is set to the security mode. In this embodiment, it can be determined that whether the target air conditioner is set to the security mode based on the operation mode of the air conditioner corresponding to the identification and the corresponding relationship between the identification and the operating mode.

In an embodiment, if the target air conditioner is set to the security mode, after the mobile terminal is connected to the target air conditioner, the target air conditioner will send prompt information to the mobile terminal, and the prompt information is used for the binding between the mobile terminal and the target air conditioner.

In an embodiment, the target air conditioner can be set to the security mode through the mobile terminal. First, the wireless connection with the target air conditioner is established. The wireless connection can use a wireless network connection or a Bluetooth connection. After the wireless connection is established, the mode of the target air conditioner can be set through the wireless connection. In this embodiment, in order to ensure the security of setting the security mode, it is necessary to detect the signal strength of the wireless connection in real time.

In an embodiment, after obtaining the signal strength of the wireless connection, it is determined whether the signal strength of the wireless connection meets the conditions, and the target air conditioner is set to the security mode only when the signal strength meets the conditions. In this embodiment, it is determined whether the signal strength meets the conditions based on the preset strength. Specifically, in response to the signal strength reaching the preset strength, that is, the signal strength is greater than the preset strength, it means that the signal strength of the wireless connection meets the conditions at this time, in this case, the target air conditioner is set to the security mode. In this embodiment, if Bluetooth connection is used, the preset strength can be set to -57dBm. In response to the signal strength being greater than -57dBm, the target air conditioner is set to the security mode. The preset intensity in this embodiment can also certainly be set to other values, and can be set correspondingly according to the actual situation, which is not limited in this embodiment.

Step S01: sending the target password information to the target air conditioner according to the prompt information.

In an embodiment, the prompt information can be a text prompt information or a graphical prompt information, such as a password input interface. After receiving the prompt information, the target password information is input through the password input interface corresponding to the prompt information. The password information is sent to the target air conditioner, and the target password information can be set correspondingly according to the actual situation, which is not limited in this embodiment.

Step S02: determining that the target password information is received by the target air conditioner, and binding the target air conditioner according to the target password information.

In an embodiment, after the target password information is received by the target air conditioner, the target air conditioner is bound based on the target password information, and the control rights are bound based on the target password information, thereby realizing the uniqueness between the mobile terminal and the target air conditioner.

In this embodiment, in order to make the binding more accurate and secure, it may be implemented in the following method.

In the specific implementation, the target password information is input by the user, and the set password input by the user can be extracted from the target password information. The set password can be a six-digit password or other forms of passwords, which is not limited herein. Further, the mobile terminal has a corresponding address information and number information. The address information includes media access control (MAC) address information, and the number information includes mobile phone number information. Similarly, the target air conditioner also has a corresponding identification code, that is, a device identification code. The identification code can be a serial number (SN) code. In this embodiment, the corresponding relationship between the set password, current number information, current address information and device identification code is constructed, that is, the mapping relationship table. The mapping relationship table is bound to the target air conditioner, which can effectively ensure the uniqueness between the mobile terminal and the target air conditioner.

Furthermore, in this embodiment, the binding relationship between the mobile terminal and the target air conditioner can also be switched, which improves the intelligence and flexibility of the security control. Specifically, when other mobile terminals are bound to the target air conditioner, they need to input the target password information set by the current mobile terminal. The target air conditioner will also compare the password information input by other mobile terminals with the target password information. In response to that the password input by other mobile terminals is inconsistent with the target password information, it means that the other mobile terminals are connected maliciously, and the target air conditioner is not bound to the other mobile terminals at this time. Further, in response to that the password information input by other mobile terminals is consistent with the target password information, it means that the user needs to change to other mobile terminals and control the target air conditioner through other mobile terminals. In this case, the current mobile terminal will be unbound with the air conditioner so that other mobile terminals can be bound to the target air conditioner.

This embodiment detects that the target air conditioner is set to the security mode, receives the prompt information sent by the target air conditioner; sends the target password information to the target air conditioner according to the prompt information; determines that the target air conditioner receives the target password information, forms the mapping relationship table according to the set password, the current number information, the current address information and the device identification code, and binds the mapping relationship table to the target air conditioner, the uniqueness between the mobile terminal and the air conditioner can be effectively ensured to prevent others from being able to control the air conditioner through other mobile terminals, which improves the security of air conditioner control.

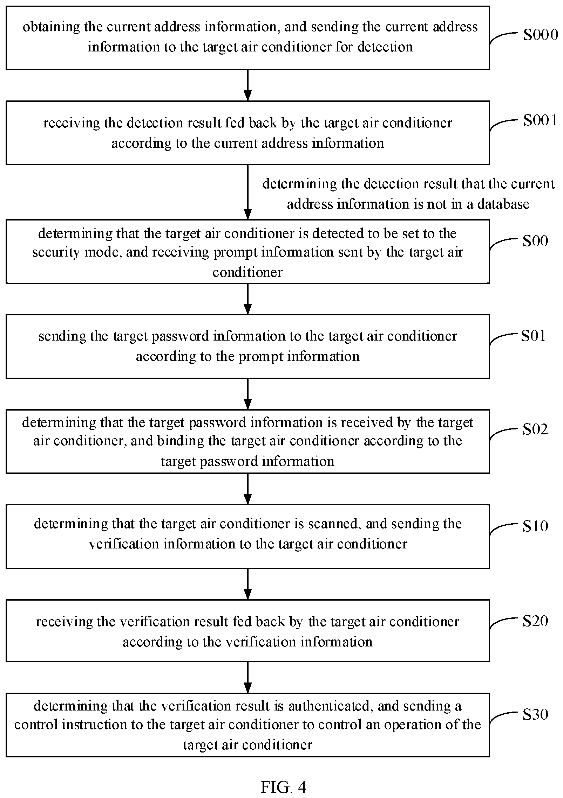

As shown in FIG. 4, FIG. 4 is a schematic flowchart of the security protection method for the air conditioner according to a third embodiment of the present application.

Based on the above second embodiment, a third embodiment of the security protection method for the air conditioner according to the present application is provided. In this embodiment, before step 500, the method further includes:

Step S000: obtaining the current address information, and sending the current address information to the target air conditioner for detection.

It should be noted that the prompt information sent by the target air conditioner is to prompt the user to set a corresponding password through the mobile terminal, but if the password information already exists in the target air conditioner, the target air conditioner will not send the prompt information to the mobile terminal.

In this embodiment, there is a one-to-one correspondence between the password information input by the user and the address information of the mobile terminal. When detecting whether there is the password information, it can be determined by the target air conditioner based on the current address information.

Step S001: receiving the detection result fed back by the target air conditioner according to the current address information.

It should be noted that after the current address information is received by the target air conditioner, it is queried in the database that whether there is the password information based on the current address information, and the detection result is sent to the mobile terminal based on the query results. For example, in response to that the current address information is not queried in the database by the target air conditioner, and the detection result that the current address information does not exist in the database is fed back to the mobile terminal. Further, in response to that the password information corresponding to the current address information exists in the database, the user needs to be prompted to enter the password information. It is easy to understand that the user may forget the password information. In this case, the preset button can be clicked, such as the forgot password button, and then the corresponding number information and address information of the mobile terminal is sent to the target air conditioner to modify the password information.

Furthermore, in the actual process, the password information may be maliciously set by other users, so it is necessary to detect whether there is a corresponding historical password information in the target air conditioner. In this embodiment, it is determined that whether there is the historical password information based on the device identification code. In response to that the target air conditioner is detected to have historical password information before being bound with the target air conditioner, it means that the password information is maliciously set by the other users. In this case, the QR code can be scanned to send the device identification code of the target air conditioner to the cloud server, and then the historical password information is cleared according to the device identification code through the cloud server, so that the user can set a new password information through the mobile terminal.

This embodiment obtains the current address information, sends the current address information to the target air conditioner for detection; receives the detection result fed back by the target air conditioner based on the current address information, and can prompt the user to input the correct password in the case that the user has set a password. The device identification code of the target air conditioner can also be obtained; it is determined that whether the target air conditioner has the historical password information according to the device identification code. In response to that the target air conditioner has the historical password information, the historical password information is cleared, and the password can also be cleared when the air conditioner is maliciously controlled by the other user, thereby improving the security of air conditioning control.

In addition, the embodiment of the present application further provides a storage medium on which a security protection program for an air conditioner is stored. When the security protection program for an air conditioner is executed by a processor, the above steps of the security protection method for the air conditioner are realized.

Since the storage medium adopts all the technical solutions of all the above embodiments, it has at least all the functions brought by the technical solutions of the above embodiments, which will not be repeated herein.

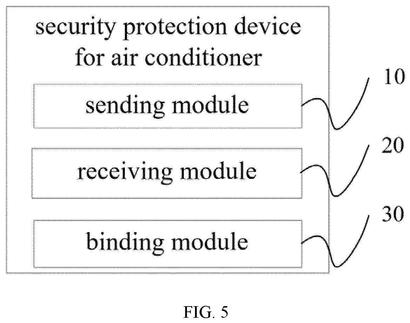

As shown in FIG. 5, FIG. 5 is a schematic structural diagram of a security protection device for the air conditioner according to the first embodiment of the present application.

As shown in FIG. 5, the security protection device for the air conditioner provided in the embodiment of the present application includes a sending module 10, a receiving module 20, and a control module 30.

The sending module 10 is configured to send the verification information to the target air conditioner in response to determining that the target air conditioner is scanned.

It should be noted that the execution subject of this embodiment can be a security protection device for the air conditioner, and the security protection device for the air conditioner can be an electronic device such as a personal computer or a server, or other controllers and devices that can achieve the same or similar function, which is not limited here. In this embodiment and the following embodiments, the security protection method for the air conditioner of the present application is explained by taking the security protection device for the air conditioner being a mobile terminal as an example.

It should be noted that the virtual digital remote control usually uses mobile terminals such as mobile phones to control the air conditioner, and uses wireless connection methods such as Bluetooth or the internet to send corresponding the instructions to the air conditioner, such as on and off instructions or temperature parameter setting instructions. The air conditioner performs corresponding operations according to the received instructions. It is easy to understand that the transmission of wireless signals has a corresponding transmission distance. For example, the effective communication distance of Bluetooth is usually ten meters, and the strength of wireless signals corresponding to different transmission distances is also different. The farther the transmission distance, the lower the wireless signal strength. On the contrary, the shorter the transmission distance, the higher the wireless signal strength. Therefore, in the related art, the control right of the mobile terminal to the air conditioner is determined based on the relationship between the transmission distance of the wireless signal and the wireless signal strength. Specifically, in the related art, if the mobile terminal intends to control the air conditioner, it needs to ensure that the strength of the wireless signal meets certain conditions, that is, the relative distance between the mobile terminal and the air conditioner needs to be within a certain range, and this distance is usually two meters. Therefore, as long as the distance between the mobile terminal and the air conditioner is within two meters and the wireless signal strength between the mobile terminal and the air conditioner is high, the air conditioner can be controlled. However, due to the different installation positions of the air conditioners and the different indoor space structures, the wireless signal strength between other people's mobile terminals and the user' s air conditioner is higher. In this case, other people can obtain the control right of the air conditioner, rather than the users themselves. In order to avoid the problem in this embodiment, when controlling the air conditioner, the user needs to input verification information to the air conditioner through the mobile terminal, and determine whether the user has the control right of the air conditioner based on the verification information, thereby avoiding disorder in the control of the air conditioner, and improving the security.

In an embodiment, when the user wants to use the air conditioner, the indoor environment is scanned through the mobile terminal, and when the air conditioner to be controlled, that is, the target air conditioner is scanned, the verification information is sent to the target air conditioner through the mobile terminal. In this embodiment, the user can send the verification information to the target air conditioner through the APP applet on the mobile terminal, or send the verification information to the target air conditioner by scanning the QR code corresponding to the target air conditioner. The specific method can be determined according to the actual situation, which is not limited in this embodiment.

It should be noted that in this embodiment, the verification information can be sent to the target air conditioner based on the user's manual triggering operation, or a preset time can be set. When the preset time is reached, the verification information pre-stored in the mobile terminal will be sent to the target air conditioner to realize timing switching and control of the air conditioner. In this embodiment, other methods can also be used to send the verification information to the target air conditioner. The verification information can be set accordingly according to the actual situation, which is not limited in this embodiment. In addition, it should be noted that the verification information sent to the target air conditioner in this embodiment includes the terminal information of the mobile terminal, the password information input by the user, and the mobile phone number information corresponding to the user's mobile terminal, which is not limited herein.

The receiving module 20 is configured to receive a verification result fed back by the target air conditioner according to the verification information.

In this embodiment, after the verification information sent by the mobile terminal is received by the target air conditioner, the verification information will be verified, and then the verified verification result is sent to the mobile terminal. In an embodiment, the verification process of the target air conditioner is extracting the mobile phone number information and the password information input by the user corresponding to the mobile terminal from the verification information, and then querying the password information corresponding to the mobile phone number information from the database according to the mobile phone number information. Finally, the password information queried in the database is compared with the password information input by the user, and corresponding verification results are fed back based on the password information comparison results. In this embodiment, the verification results include verification authenticated and verification unauthenticated. For example, in response to the password information being found to be consistent after the comparison, the verification authenticated result is fed back; in response to the password information being found to be inconsistent after the comparison, the verification unauthenticated result is fed back. It should be further noted that in this embodiment, the target air conditioner is connected to a cloud server. The cloud server stores the password information stored in each user's mobile terminal. The target air conditioner can obtain the corresponding password information from the cloud server through the internet.

The control module 30 is configured to send a control instruction to the target air conditioner to control an operation of the target air conditioner in response to determining that the verification result is authenticated.

In an embodiment, in response to that the verification is authenticated, it means that the mobile terminal has the corresponding control right to the target air conditioner, and can send a control instruction to the target air conditioner to realize the control of the target air conditioner. For example, input an on and off instruction to the target air conditioner, to control the startup and shutdown of the target air conditioner, and input parameter adjustment instructions to the target air conditioner to adjust the outlet air temperature of the target air conditioner when it is running. In response to that the verification is unauthenticated, it means that the user does not have the control right of the target air conditioner, or the user has the control right of the target air conditioner, but the verification information input is wrong.

In an embodiment, the target air conditioner is scanned, the verification information is sent to the target air conditioner; and the verification result fed back by the target air conditioner according to the verification information is received. The verification result is determined to be authenticated, the control instruction is sent to the target air conditioner to control the operation of the target air conditioner, and the control right of the air conditioner is confirmed through the verification information, so as to avoid the situation that other people can also control the user's own air conditioner, and improve the security of air conditioner control.

It should be understood that the above are only exemplary description and do not constitute any limitation on the technical solution of the present application. In specific applications, those skilled in the art can make settings as needed, and the present application does not impose any limitations hereon.

It should be noted that the workflow described above is only illustrative and does not limit the scope of the present application. In practical applications, those skilled in the art can select part or all of them to implement according to actual needs. The purpose of the solution of the embodiment is not limited here.

In addition, for technical details that are not exhaustively described in the embodiments, reference may be made to the security protection method for the air conditioner provided in any embodiment of the present application, which will not be repeated here.

Furthermore, it should be noted that in this document, the term "comprises", "include" or any other variation thereof is intended to cover a non-exclusive inclusion such that a process, method, article or system comprising a set of elements includes not only those elements, it also includes other elements not expressly listed, or elements inherent in the process, method, article, or system. Without further limitations, an element defined by the phrase "comprising a..." does not preclude the presence of additional identical elements in the process, method, article or system comprising that element.

The serial numbers of the above embodiments of the present application are for description only, and do not represent the advantages and disadvantages of the embodiments.

Through the description of the above embodiments, those skilled in the art can clearly understand that the methods of the above embodiments can be implemented by means of software plus the necessary general-purpose hardware platform, and of course also be by hardware, but in many cases the former is better implementation. Based on such an understanding, the technical solution of the present application can be embodied in the form of a software product in essence or that contributes to the related art, and the computer software product is stored in a storage medium as described above (such as a read only memory(ROM)/RAM, magnetic disk, optical disk), including several instructions to enable a terminal device (which may be a mobile phone, computer, server, or network device, etc.) to execute the methods described in various embodiments of the present application.

The above are only some embodiments of the present application, and are not intended to limit the patent scope of the present application. Any equivalent structure or equivalent process transformation made by using the contents of the description and drawings of the present application, or directly or indirectly used in other related technical fields, is also included in the scope of present application.

## Claims

1. A security protection method for an air conditioner, **characterized by** comprising:
determining that a target air conditioner is scanned, and sending verification information to the target air conditioner;
receiving a verification result fed back by the target air conditioner according to the verification information; and
determining that the verification result is authenticated, and sending a control instruction to the target air conditioner to control an operation of the target air conditioner.

2. The security protection method for the air conditioner according to claim 1, wherein before the determining that the target air conditioner is scanned, and sending the verification information to the target air conditioner, the method further comprises:
detecting that the target air conditioner is set to a security mode, and receiving prompt information sent by the target air conditioner;
sending target password information to the target air conditioner according to the prompt information; and
determining that the target password information is received by the target air conditioner, and binding the target air conditioner according to the target password information.

3. The security protection method for the air conditioner according to claim 2, wherein, before the detecting that the target air conditioner is set to the security mode, and receiving the prompt information sent by the target air conditioner, the method further comprises:
establishing a wireless connection with the target air conditioner;
detecting a signal strength corresponding to the wireless connection; and
determining that the signal strength reaches a preset strength, and setting the target air conditioner to the security mode.

4. The security protection method for the air conditioner according to claim 2, wherein before the receiving the prompt information sent by the target air conditioner, the method further comprises:
obtaining current address information, and sending the current address information to the target air conditioner for detection;
receiving a detection result fed back by the target air conditioner according to the current address information; and
in response to the detection result being that the current address information is not in a database, receiving the prompt information sent by the target air conditioner.

5. The security protection method for the air conditioner according to claim 2, wherein before the receiving the prompt information sent by the target air conditioner, the method further comprises:
obtaining a device identification code of the target air conditioner;
determining whether there is historical password information in the target air conditioner according to a device identification code; and
in response to the historical password information existing in the target air conditioner, clearing the historical password information, and receiving the prompt information sent by the target air conditioner.

6. The security protection method for the air conditioner according to claim 2, wherein the binding the target air conditioner according to the target password information comprises:
extracting a set password input by a user from the target password information;
obtaining the current address information, current number information and the device identification code of the target air conditioner; and
forming a mapping relationship table according to the set password, the current number information, the current address information and the device identification code, and binding the target air conditioner through the mapping relationship table.

7. The security protection method for the air conditioner according to claim 2, wherein after the determining that the target password information is received by the target air conditioner, and binding the target air conditioner according to the target password information, the method further comprises:
detecting that other mobile terminals are connected to the target air conditioner, and receiving a password information comparison result between the target air conditioner and the other mobile terminals fed back by the target air conditioner; and
in response to the password information comparison result being that the password information is consistent, unbinding with the target air conditioner to bind the other mobile terminals with the target air conditioner.

8. A security protection device for an air conditioner, **characterized by** comprising:
a sending module, configured to send verification information to a target air conditioner in response to determining that the target air conditioner is scanned;
a receiving module, configured to receive a verification result fed back by the target air conditioner according to the verification information; and
a control module, configured to send a control instruction to the target air conditioner to control an operation of the target air conditioner in response to determining that the verification result is authenticated.

9. A terminal equipment, **characterized by** comprising:
a memory,
a processor, and
a security protection program for an air conditioner stored on the memory and operable on the processor;
wherein the security protection program for the air conditioner is configured to implement the security protection method for the air conditioner according to any one of claims 1 to 7.

10. A storage medium, **characterized in that**, a security protection program for an air conditioner is stored on the computer-readable storage medium, and when the security protection program for the air conditioner is executed by a processor, the security protection method for the air conditioner according to any one of claims 1 to 7 is implemented.
